# EUROPÄISCHE PATENTSCHRIFT

(11) **EP 0 995 565 B1**
(45) Veröffentlichungstag und Bekanntmachung des Hinweises auf die Patenterteilung: **15.09.2004**
(21) Anmeldenummer: 98121868.8
(22) Anmeldetag: 17.11.1998
(51) Int. Cl.: B29B 7/48, B29C 47/42

(54) **Maschine zum kontinuierlichen Bearbeiten von fliessfähigen Materialen**
Apparatus for continuous treatment of flowable material
Appareil pour le traitement continu de materiaux coulants

(30) Priorität: 13.10.1998 DE 19847103
(43) Veröffentlichungstag der Anmeldung: 26.04.2000
(73) Patentinhaber: Blach, Josef A., 74348 Lauffen (DE); Blach, Michael, 74348 Lauffen (DE); Blach, Markus, 74348 Lauffen (DE)
(72) Erfinder: Blach, Josef A., 74348 Lauffen (DE); Blach, Michael, 74348 Lauffen (DE); Blach, Markus, 74348 Lauffen (DE)
(74) Vertreter: Haft, von Puttkamer, Berngruber, Czybulka

(56) Entgegenhaltungen:
- EP-A- 0 422 272
- EP-A- 0 788 867
- WO-A-97/31767
- DE-A- 1 595 735
- DE-A- 19 607 663
- DE-C- 4 231 232
- DE-C- 19 607 666
- US-A- 4 591 487
- US-A- 5 393 140

## Beschreibung

Die Erfindung bezieht sich auf eine Maschine zum kontinuierlichen Bearbeiten von fließfähigen Materialien nach dem Oberbegriff des Anspruchs 1.

Eine derartige Maschine ist z.B. aus EP 0 788 867 A1 bekannt. Die Gehäusewand besteht dabei beispielsweise aus zwei etwa gleich langen Segmenten, wobei das eine Segment mit der Materialzufuhröffnung und das andere Segment mit den weiteren Durchtrittsöffnungen versehen ist, durch die im Anschluss an eine Knet- und Stauzone aus dem zu bearbeitenden Material Gase abgesaugt werden.

Die Bearbeitungselemente müssen in die halbkreisförmigen Rinnen in dem Innenkern und in der Gehäusewand weitgehend dicht eingreifen. Andererseits ist das Gehäuse einem hohen Verschleiß ausgesetzt. Damit müssen die beiden mit hohem Aufwand hergestellten Segmente häufiger ausgetauscht werden.

Aus US-A-5,393,140 ist eine Vorrichtung zum kontinuierlichen Bearbeiten von Flüssigkeit und Massen bekannt, bei der die Schneckenwellen von einer Zentralwelle angetrieben werden, an der ein Zentralzahnrad befestigt ist, welches mit einem Ritzel an Trabantenwellen kämmt, während ein zweites Ritzel auf den Trabantenwellen mit einem gehäusefesten Zahnring kämmt. Ein Zwischenabschnitt weist ein Gehäuse aus drei Segmenten auf, wobei eines dieser Segmente einen Zufuhrkanal zur Zufuhr weiterer Substanzen aufweist, der an einer Stelle vorgesehen ist, an der die Bearbeitungselemente mit dem Gehäuse nicht in Berührung stehen.

Aufgabe der Erfindung ist es, die durch den Austausch der Segmente hervorgerufenen Kosten einer solchen Maschine wesentlich herabzusetzen.

Dies wird erfindungsgemäß mit der im Anspruch 1 gekennzeichneten Maschine erreicht. In den Unteransprüchen sind vorteilhafte Ausgestaltungen der Erfindung wiedergegeben.

Wie festgestellt werden konnte, ist der Verschleiß des Gehäuses in der Maschine in Axialrichtung unterschiedlich, und zwar, verglichen mit der übrigen Gehäusewand, vor allem dort, wo sich die Durchtrittsöffnungen befinden, über die Stoffe zugeführt oder abgeführt werden.

Beispielsweise tritt ein hoher Verschleiß im Bereich von Durchtrittsöffnungen auf, durch die dem zu bearbeitenden Material in der Maschine feste Zusatzstoffe zugeführt werden, beispielsweise Verstärkungsfasern in Form von Rovings. Der Verschleiß im Bereich der Durchtrittsöffnungen kann jedoch auch vergleichsweise gering sein, z.B., wenn die Durchtrittsöffnungen zum Absaugen von Gasen oder zur Zufuhr von Stoffen mit schmierenden Eigenschaften verwendet werden.

Aufgrund dieses unterschiedlichen Verschleißes der Gehäusewand im Bereich der Durchtrittsöffnungen werden erfindungsgemäß kurze Segmente eingesetzt, in denen diese Durchtrittsöffnungen vorgesehen sind, während die übrigen Segmente der Gehäusewand länger ausgebildet sind, allerdings nicht länger als der Außendurchmesser des Gehäuses bzw. des größten Teils des Gehäuses und damit der langen Segmente.

Der Verschleiß der Gehäusewand kann zudem von den Bearbeitungselementen abhängig sein. So kann eine solche Maschine zwischen der Materialzufuhröffnung und der Materialaustrittsöffnung eine oder mehrere Knetzonen und/oder Stauzone aufweisen. Die positiv fördernden Schneckenelemente als Bearbeitungselemente sind in der Knetzone dann beispielsweise durch Knetblöcke ersetzt, wie sie z.B. aus EP-0 422 272 A1 bekannt sind, und in der Stauzone beispielsweise durch Stauscheiben oder negativ fördernde Schneckenelemente.

Erfindungsgemäß brauchen damit die Segmente, die einem geringeren Verschleiß unterliegen, weniger oft ausgetauscht zu werden, als die Segmente, die einem hohen Verschleiß ausgesetzt sind. Damit werden die Betriebskosten der Maschine wesentlich herabgesetzt.

Wenn man den Durchmesser der Bohrungen zur Aufnahme der Wellen mit den Bearbeitungselementen zugrundelegt, beträgt die Länge der langen Segmente vorzugsweise das drei- bis siebenfache, insbesondere etwa das fünffache und die Länge der kurzen Segmente das ein- bis dreifache, insbesondere etwa das zweifache dieses Durchmessers.

Da ihre Festigkeit durch die Durchtrittsöffnungen geschwächt sein kann, weisen die kurzen Segmente vorzugsweise eine größere Wandstärke als die langen Segmente auf. Dabei kann die Wandstärke der langen Segmente beispielsweise das ein- bis dreifache, insbesondere etwa das zweifache des Durchmessers der Bohrungen zur Aufnahme der Wellen mit den Bearbeitungselementen betragen. Zudem können die langen Segmente an ihrem Außenumfang mit wenigstens einer Ringnut zur Aufnahme eines Heiz- oder Kühlkörpers versehen sein.

Die Durchtrittsöffnungen in den kurzen Segmenten werden vorzugsweise zumindest teilweise durch größere Öffnungen gebildet, die einen Durchmesser aufweisen, der wenigstens halb so groß ist wie der Durchmesser der Bohrungen zur Aufnahme der Wellen mit den Bearbeitungselementen.

Die langen Segmente sind entweder ganz geschlossen oder allenfalls mit kleinen Öffnungen von weniger als der Hälfte, insbesondere weniger als ein Viertel des Durchmessers der Bohrungen zur Aufnahme der Wellen mit den Bearbeitungselementen versehen. Die kleinen Bohrungen in den langen Segmenten können beispielsweise zur Temperaturmessung, zur Probeentnahme oder zur Zufuhr viskoser Stoffe verwendet werden.

Wenn das zu bearbeitende Material ein festes Material ist, das in der Maschine plastifiziert wird, beispielsweise ein thermoplastisches Kunststoffgranulat, können die Durchtrittsöffnungen beispielsweise zum Absaugen von Gasen aus dem plastifizierten Material oder zur Zufuhr von Zusatzstoffen zu den plastifizierten Material verwendet werden. Diese Zusatzstoffe können beispielsweise Verstärkungsmateralien, wie Verstärkungsfasern sein, die z.B. in Form von Rovings zugeführt werden können.

Zur Zufuhr solcher fester Zusatzstoffe können Durchtrittsöffnungen erforderlich sein, die größer sind als die Durchtrittsöffnungen zum Austritt von Gasen. So können die Durchtrittsöffnungen zum Austritt von Gasen beispielsweise dem Durchmesser der Bohrungen zur Aufnahme der Wellen mit dem Bearbeitungselementen entsprechen oder kleiner sein, während die Durchtrittsöffnungen zur Zufuhr fester Zusatzstoffe größer sein können als der Durchmesser der Bohrungen zur Aufnahme der Wellen mit den Bearbeitungselementen.

Demgemäß ist es erfindungsgemäß auch möglich, die kurzen Segmente in solche einzuteilen, die wenigstens eine Durchtrittsöffnung mit einem Durchmesser aufweisen, der größer ist als der Durchmesser der Bohrungen zur Aufnahme der Wellen mit den Bearbeitungselementen, und in solche, die ausschließlich Durchtrittsöffnungen mit einem Durchmesser aufweisen, der maximal dem Durchmesser der Bohrungen zur Aufnahme der Wellen mit den Bearbeitungselementen entspricht. Die kurzen Segmente mit wenigstens einer solchen großen Durchtrittsöffnung, deren Durchmesser größer ist als der Durchmesser der Bohrungen zur Aufnahme der Wellen mit den Bearbeitungselementen können dabei gleich lang oder länger sein als die anderen kurzen Segmente.

Neben den kurzen und langen Segmenten weist das Gehäuse ein Füllsegment auf, das mit der Materialzufuhröffnung versehen ist. Das Füllsegment ist vorzugsweise mit einer Öffnung zum Gasaustritt aus dem Raum mit den Wellen versehen. Nach dem Eintritt durch die Materialzufuhröffnung in diesen Raum wird das zu bearbeitende Material zwischen benachbarten Wellen zwischen der Außenseite und der Innenseite des Raumes jeweils hin- und hergefördert. Wenn das zu bearbeitende Material ein Pulver ist, wird dadurch der Gasanteil des Pulvers vom Feststoff abgetrennt. Durch die Gasaustrittsöffnung kann damit der Gasanteil abgesaugt werden.

Demgemäß können mit der erfindungsgemäßen Maschine z.B. auch sehr feinpulverige Stoffe bearbeitet werden, die sonst mit einer solchen Maschine nicht bearbeitet werden können, weil der hohe Luftanteil zu Problemen in der Maschine führt.

Die Gasaustrittsöffnung kann in dem Füllsegment vorgesehen sein oder bei einer hohlen Ausbildung des Innenkerns durch eine Öffnung, die von dem Raum mit den Wellen in den hohlen Innenkern führt.

Nachstehend ist eine Ausführungsform der erfindungsgemäßen Maschine anhand der beigefügten Zeichnung näher erläutert. Darin zeigen:
- Fig. 1: einen Längsschnitt durch die Maschine;
- Fig. 2 und 3: einen Querschnitt entlang der Linie II-II bzw. III-III in Fig. 1;
- Fig. 4: einen Querschnitt entlang der Linie IV-IV durch das Füllsegment in Fig. 1; und
- Fig. 5: einen Querschnitt entsprechend Fig. 4, jedoch von einer anderen Ausführungsform des Füllsegments.

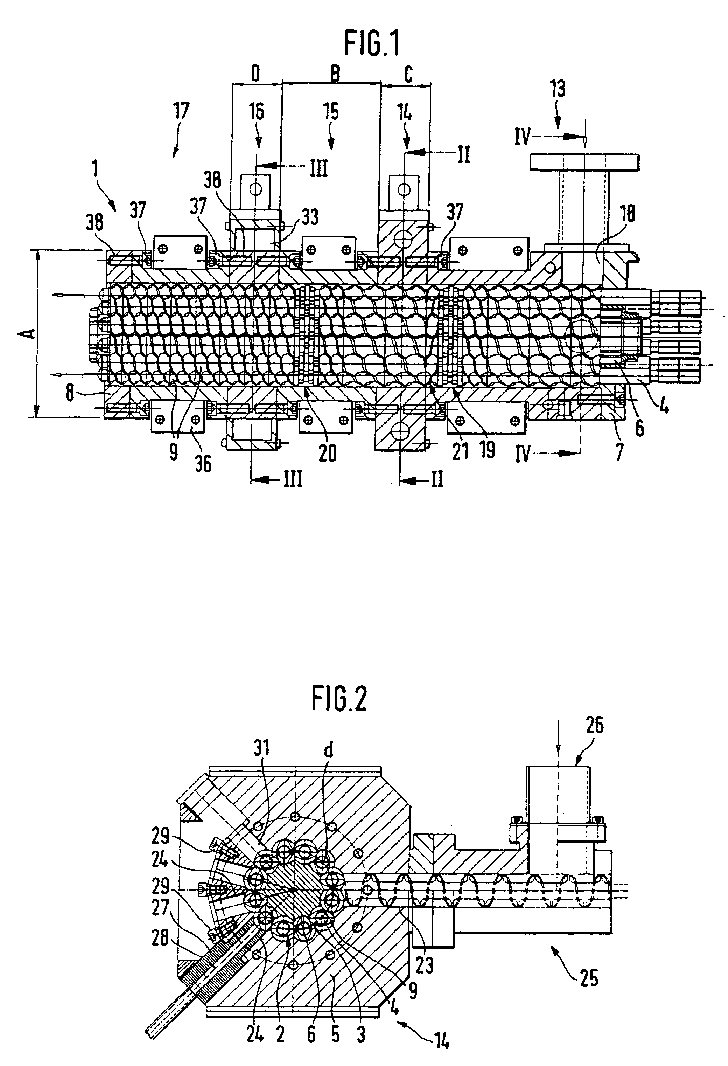

Gemäß Fig. 1 bis 3 weist die Maschine in einem Gehäuse 1 einen Raum 2 auf, der sich längs des Teilkreises 3 erstreckt (Fig. 2). In dem Raum 2 sind mehrere achsparallel angeordnete Wellen 4 angeordnet. Der Raum 2 erstreckt sich zwischen einem axialen Innenkern 6 und einem dazu koaxialen Gehäusemantel 5.

Das Gehäuse 1 ist an seinen Stirnseiten mit Endplatten 7, 8 abgeschlossen. Die sich durch die Platte 7 erstreckenden Wellen 4 werden von einem nicht dargestellten Antrieb gleichsinnig angetrieben. An der Platte 8 kann beispielsweise ein nicht dargestellter Spritzkopf mit der Materialaustrittsöffnung befestigt sein.

An jeder Welle 4 sind mehrere positiv fördernde Bearbeitungselemente 9 angeordnet, die als Schneckenelemente ausgebildet sind. Wie Fig. 2 bis 3 zu entnehmen, greifen die Schnekkenelemente 9 benachbarter Wellen 4 kämmend mit geringem Spiel, also weitgehend dicht, ineinander.

Der Gehäusemantel 5 ist an der Innenseite und der Kern 6 an seiner Außenseite mit achsparallelen halbkreisförmigen Vertiefungen oder Rinnen versehen, und zwar unter Bildung kreisförmiger Bohrungen mit einem Durchmesser d. Der Kreismittelpunkt dieser Bohrungen liegt auf dem Teilkreis 3. In die Rinnen 10 und 11 greifen die Bearbeitungselemente 9 mit geringem Spiel, also weitgehend dicht, ein.

Der Gehäusemantel 5 wird von der Endplatte 7 zur Endplatte 8 durch radiale Teilung durch ein Füllsegment 13, ein erstes kurzes Segment 14, ein erstes langes Segment 15, ein zweites kurzes Segment 16 und ein zweites langes Segment 17 gebildet.

Das Füllsegment 13 ist an der Oberseite mit einer Öffnung 18 versehen, durch die das (nicht dargestellte) zu bearbeitende Material dem Raum 2 mit den Wellen 4 zugeführt wird.

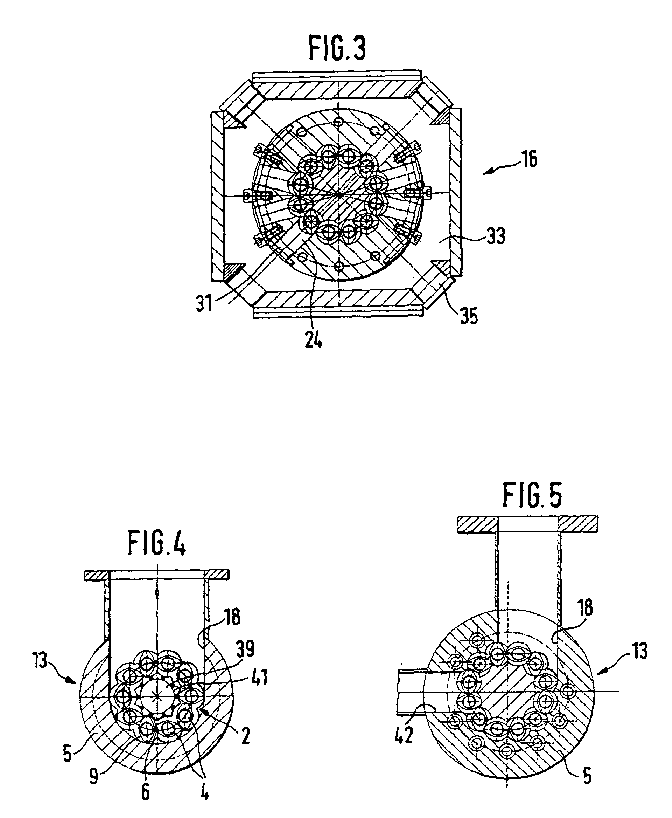

Gemäß Fig. 4 verlaufen die Seitenflächen der Öffnung 18 tangential zum kreisbogenförmigen Raum 2, sodass die Öffnung 18 mit dem Raum 2 im Querschnitt einen U-förmigen Raum bildet.

Zwischen der Materialzufuhröffnung 18 und der (nicht dargestellten) Materialaustrittsöffnung am anderen Ende des Gehäuses 1 ist in dem Raum 2 im Abstand von der Einfüllöffnung 18 im Füllsegment 13 und im ersten langen Segment 15 jeweils eine Knetzone 19, 20 vorgesehen und im Anschluss an die Knetzone 19 noch eine Stauzone 21. Im Bereich der Knetzone 19, 20 sind die Schneckenelemente 9 durch Knetblöcke ersetzt, wie sie beispielsweise aus EP-0 422 272 A1 bekannt sind, und in der Stauzone 21 durch negativ fördernde, und damit Stau erzeugende Schneckenelemente oder gegebenenfalls Stauscheiben.

Die langen Segmente 15, 17 weisen eine Länge B und die kurzen Segmente 14, 16 eine Länge C bzw. D auf. Die Länge B der langen Segmente 15, 17 ist kleiner als der Außendurchmesser A des Gehäusemantels 5 im Bereich der langen Segmente 15, 17 oder der Endplatten 7, 8. Bei einem eckigem Außenumfang der langen Segmente 15, 17 bzw. der Endplatten 7, 8 ist A der Abstand zwischen den beiden einander nächsten gegenüberliegenden Seiten. Der Abstand A stellt also den Abstand zwischen den einander nächsten gegenüberliegenden Seiten der Außenkontur der langen Segmente 15, 17 bzw. der Endplatten 7, 8 dar.

Bezogen auf den Durchmesser d der Bohrungen in dem Raum 2 kann die Länge B der langen Segmente 15, 17 beispielsweise das drei- bis fünffache und die Länge C bzw. D der kurzen Segmente 14, 16 das ein- bis dreifache des Durchmessers d betragen.

Gemäß Fig. 2 und 3 sind in den kurzen Segmenten 14, 16 jeweils mehrere Durchtrittsöffnungen 23, 24 in Form von in den Raum 2 mündenden Radialbohrungen vorgesehen.

Das erste kurze Segment 14 weist dabei eine Bohrung 23 mit einem Durchmesser auf, der größer ist als der Durchmesser d, ferner mehrere kleinere Bohrungen 24 mit einem dem Durchmesser d entsprechenden Durchmesser.

Über die große Bohrung 23 werden mit einem Schneckenförderer 25 feste Zusatzstoffe zugeführt, beispielsweise Glasfasern in Form von Kurzfasern, die über die Einfüllöffnung 26 zugegeben werden. In einer der Bohrungen 24 ist ein Körper 27 mit einer Bohrung 28 mit kleinem Durchmesser befestigt, und zwar mit einer Schraube 29. Die übrigen Bohrungen 24 sind durch Füllstücke 31 verschlossen, die mit Schrauben 29 befestigt sind. Die Schrauben 29 können mit ihrem Kopf gegen den Körper 27 bzw. Flansche an den Füllstücken 31 verschraubt sein. Über die Bohrung 28 in dem Körper 27 können beispielsweise flüssige Stoffe zugeführt werden, beispielsweise Wasser, Weichmacher, Reaktionsstoffe oder Benetzungsmittel.

Die durch die Füllstücke 31 verschlossenen Bohrungen 24 können im Bedarfsfall zum Absaugen flüchtiger Stoffe verwendet werden. Gleiches gilt für die Bohrungen 24 im zweiten kurzen Segment 16, das wie das kurze Segment 14 einen im wesentlichen eckigen Außenumfang aufweist. Im kurzen Segment 16 ist ein Ringkanal 33 vorgesehen, der die Bohrungen 24 mit Öffnungen 34 an den Kanten verbindet, die durch Füllstücke 35 verschlossen werden können.

Das erste kurze Segment 14 mit der großen Durchtrittsöffnung 23 kann eine Länge C aufweisen, die der Länge D des zweiten kurzen Segments 16 entspricht oder größer ist.

Das erste kurze Segment 14 ist dabei, abgesehen vom Bereich der Radialbohrungen 24, massiv ausgebildet, d.h., es weist eine größere Wandstärke auf als die langen Segmente 15, 17.

Die kurzen Segmente 14, 16 befinden sich außerhalb des Bereichs der Knetzonen 19, 20 und der Stauzone 21.

Das Füllsegment 13 und die langen Segmente 15, 17 sind jeweils am Außenumfang mit einer Ringnut versehen, in denen jeweils ein Heizkörper 36 angeordnet ist oder gegebenenfalls ein Kühlkörper.

Durch die Ringnuten werden an den langen Segmenten 15, 17 Flansche gebildet. Um die alternierenden kurzen und langen Segmente 14 bis 17 miteinander zu verbinden, sind in den Flanschen der langen Segmente 15, 17 Löcher vorgesehen, durch die Schrauben 37 gesteckt sind, die in Gewindebohrungen 38 in den kurzen Segmenten 14, 16 geschraubt sind. In gleicher Weise ist die Endplatte 8 am zugewandten Flansch des benachbarten langen Segments 17 befestigt, während die Befestigung des ersten kurzen Segments 14 an dem Füllsegment 13 ebenfalls durch Schrauben 37 erfolgt, die durch Löcher im benachbarten Flansch des Füllsegments 13 gesteckt sind.

Um Luft oder andere Gase aus einem pulverförmigen Material abzusaugen, das der Maschine über die Materialzufuhröffnung 18 zugeführt wird, weist gemäß Fig. 4 der Innenkern 6 eine Axialbohrung 39 auf, ferner Radialbohrungen 41 vom Raum 2 in die Axialbohrung 39, an die eine nicht dargestellte Gasabsaugung angeschlossen ist.

Stattdessen kann nach der in Fig. 5 dargestellten Variante das Füllsegment 13 mit einer gegenüber der Materialzufuhröffnung 18 im Winkel versetzten Gasaustrittsöffnung 42 versehen sein, um das Gas aus dem pulverförmigen Material abzusaugen.

## Patentansprüche

1. Maschine zum kontinuierlichen Bearbeiten von fließfähigen Materialien mit mehreren in einem Raum in einem Gehäuse zwischen dem Gehäusemantel und einem Innenkern längs eines Kreises angeordneten achsparallelen Wellen, von denen jede mehrere axial hintereinander angeordnete Bearbeitungselemente trägt, mit denen benachbarte Wellen dicht kämmend ineinandergreifen, wobei der Gehäusemantel und der Innenkern jeweils mit achsparallelen Rinnen zur Bildung von kreisförmigen Bohrungen versehen sind, die die Wellen mit ihren Bearbeitungselementen aufnehmen und führen, wenigstens eine Materialzufuhröffnung in dem Gehäusemantel zu dem Raum mit den Wellen an einem Ende, eine Materialaustrittsöffnung aus dem Raum mit den Wellen am anderen Ende des Gehäuses und zwischen der Materialzufuhröffnung und der Materialaustrittsöffnung weitere Durchtrittsöffnungen in dem Gehäusemantel zu dem Raum mit den Wellen vorgesehen sind und der Gehäusemantel durch eine radial verlaufende Teilung aus mehreren Segmenten besteht, **dadurch gekennzeichnet, dass** der Gehäusemantel (5) zwischen der Materialzufuhröffnung (18) und der Materialaustrittsöffnung in wenigstens ein kurzes Segment (14, 16) mit den weiteren Durchtrittsöffnungen (23, 24) und in lange Segmente (15, 17) geteilt ist, wobei die Länge (B) der langen Segmente (15, 17) kleiner ist als ihr Außenabstand (A).

2. Maschine nach Anspruch 1, **dadurch gekennzeichnet, dass** die Länge (B) der langen Segmente (15, 17) das drei- bis siebenfache und die Länge (C, D) der kurzen Segmente (14, 16) das ein- bis dreifache des Durchmessers (d) der Bohrungen zur Aufnahme der Wellen (4) mit den Bearbeitungselementen (9) beträgt.

3. Maschine nach Anspruch 1 oder 2, **dadurch gekennzeichnet, dass** die Durchtrittsöffnungen (23, 24) in den kurzen Segmenten (14, 16) einen Durchmesser aufweisen, der wenigstens halb so groß ist wie der Durchmesser (d) der Bohrungen zur Aufnahme der Wellen (4) mit den Bearbeitungselementen (9).

4. Maschine nach einem der vorstehenden Ansprüche, **dadurch gekennzeichnet, dass** wenigstens eines der kurzen Segmente (14) mit wenigstens einer Durchtrittsöffnung (23) versehen ist, die einen Durchmesser aufweist, der größer ist als der Durchmesser (d) der Bohrungen zur Aufnahme der Wellen (4) mit den Bearbeitungselementen (9).

5. Maschine nach Anspruch 4, **dadurch gekennzeichnet, dass** das kurze Segment (14) mit der großen Durchtrittsöffnung (23) eine Länge (C) aufweist, die gleich oder größer ist als die Länge (D) des oder der anderen kurzen Segmente (16).

6. Maschine nach einem der vorstehenden Ansprüche, **dadurch gekennzeichnet, dass** die Durchtrittsöffnungen (23, 24) in den kurzen Segmenten (14, 16) zur Zufuhr von Zusatzstoffen und/oder zum Austritt von Gasen ausgebildet sind.

7. Maschine nach Anspruch 4 und 6, **dadurch gekennzeichnet, dass** die große Durchtrittsöffnung (23) zur Zufuhr fester Zusatzstoffe ausgebildet ist.

8. Maschine nach einem der vorstehenden Ansprüche, **dadurch gekennzeichnet, dass** die Durchtrittsöffnungen (24) durch Füllstücke (31) verschließbar sind.

9. Maschine nach einem der vorstehenden Ansprüche, **dadurch gekennzeichnet, dass** zumindest ein Teil der Segmente (14 bis 17) eine Heizung oder Kühlung aufweist.

10. Maschine nach Anspruch 9, **dadurch gekennzeichnet, dass** die langen Segmente (15, 17) eine Ringnut zur Aufnahme eines Heiz- oder Kühlkörpers (36) aufweisen.

11. Maschine nach einem der vorstehenden Ansprüche, **dadurch gekennzeichnet, dass** die Bearbeitungselemente durch Schneckenelemente (9) gebildet werden und zwischen der Materialzufuhröffnung (18) und der Materialaustrittsöffnung wenigstens eine Knetzone (19, 20) vorgesehen ist, in der die Schneckenelemente (9) durch Knetblöcke ersetzt sind.

12. Maschine nach Anspruch 11, **dadurch gekennzeichnet, dass** die kurzen Segmente (14, 16) außerhalb der Knetzonen (19, 20) angeordnet sind.

13. Maschine nach einem der vorstehenden Ansprüche, **dadurch gekennzeichnet, dass** ein die Materialzufuhröffnung (18) aufweisendes Füllsegment (13) vorgesehen ist.

14. Maschine nach Anspruch 13, **dadurch gekennzeichnet, dass** das Füllsegment (13) mit einer Gasaustrittsöffnung (42) versehen ist.

15. Maschine nach Anspruch 13, **dadurch gekennzeichnet, dass** zum Gasaustritt aus dem Raum (2) mit den Wellen (4) der Innenkern (6) hohl ausgebildet ist und zumindest im Bereich der Materialzufuhröffnung (18) Gasaustrittsöffnungen (41) von dem Raum (2) mit den Wellen (4) in den hohlen Innenkern (6) vorgesehen sind.

## Claims

1. A machine for continuous processing of flowable materials having a plurality of axis-parallel shafts disposed along a circle in a space in a housing between the housing jacket and an inside core, each shaft bearing a plurality of processing elements disposed axially one behind the other with which adjacent shafts intermesh tightly, the housing jacket and the inside core being provided in each case with axis-parallel channels so as to form circular bores which receive and guide the shafts with their processing elements, at least one material inlet to the space with the shafts being provided in the housing jacket at one end of the housing, one material outlet out of the space with the shafts at the other end of the housing, and further passages to the space with the shafts in the housing jacket between the material inlet and the material outlet, and the housing jacket consists of a plurality of segments by a radially extending division, **characterized in that** the housing jacket (5) is divided between the material inlet (18) and the material outlet into at least one short segment (14, 16) with the further passages (23, 24) and into long segments (15, 17), the length (B) of the long segments (15, 17) being smaller than the outside distance (A) thereof.

2. The machine of claim 1, **characterized in that** the length (B) of the long segments (15, 17) is three to seven times the diameter (d) of the bores for receiving the shafts (4) with the processing elements (9), and the length (C, D) of the short segments (14, 16) is one to three times said diameter (d).

3. The machine of claim 1 or 2, **characterized in that** the passages (23, 24) in the short segments (14, 16) have a diameter at least half as large as the diameter (d) of the bores for receiving the shafts (4) with the processing elements (9).

4. The machine of any of the above claims, **characterized in that** at least one of the short segments (14) is provided with at least one passage (23) having a diameter which is larger than the diameter (d) of the bores for receiving the shafts (4) with the processing elements (9).

5. The machine of claim 4, **characterized in that** the short segment (14) with the large passage (23) has a length (C) which is equal to or greater than the length (D) of the other short segment or segments (16).

6. The machine of any of the above claims, **characterized in that** the passages (23, 24) in the short segments (14, 16) are formed for supplying additives and/or for discharging gases.

7. The machine of claims 4 and 6, **characterized in that** the large passage (23) is formed for supplying solid additives.

8. The machine of any of the above claims, **characterized in that** the passages (24) can be sealed by filling pieces (31).

9. The machine of any of the above claims, **characterized in that** at least part of the segments (14 to 17) has heating or cooling means.

10. The machine of claim 9, **characterized in that** the long segments (15, 17) have a ring groove for receiving a heater or heat sink (36).

11. The machine of any of the above claims, **characterized in that** the processing elements are formed by worm elements (9), and at least one kneading zone (19, 20) where the worm elements (9) are replaced by kneading blocks is provided between the material inlet (18) and the material outlet.

12. The machine of claim 11, **characterized in that** the short segments (14, 16) are disposed outside the kneading zones (19, 20).

13. The machine of any of the above claims, **characterized in that** a filling segment (13) having the material inlet (18) is provided.

14. The machine of claim 13, **characterized in that** the filling segment (13) is provided with a gas outlet (42).

15. The machine of claim 13, **characterized in that**, for discharging gas from the space (2) with the shafts (4), the inside core (6) is of hollow design and gas outlets (41) from the space (2) with the shafts (4) into the hollow inside core (6) are provided at least in the area of the material inlet (18).

## Revendications

1. Machine pour le traitement continu de matériaux coulants, comportant plusieurs arbres parallèles à l'axe agencés dans une chambre située le long d'un cercle dans un boîtier, entre l'enveloppe du boîtier et un noyau intérieur, arbres dont chacun porte plusieurs éléments de traitement agencés axialement les uns derrière les autres, avec lesquels les arbres voisins s'engrènent de manière serrée, l'enveloppe de boîtier et le noyau intérieur étant chacun pourvus de goulottes parallèles à l'axe pour former des perçages circulaires qui reçoivent et guident les arbres avec leurs éléments de traitement, au moins une ouverture d'amenée de matériau étant prévue dans l'enveloppe de boîtier vers la chambre contenant les arbres à une extrémité du boîtier, une ouverture de sortie de matériau étant prévue hors de la chambre contenant les arbres à l'autre extrémité du boîtier, et entre l'ouverture d'amenée de matériau et l'ouverture de sortie de matériau, d'autres ouvertures de passage étant prévues dans l'enveloppe de boîtier vers la chambre contenant les arbres, et l'enveloppe de boîtier étant constituée par une division de plusieurs segments, s'étendant radialement, **caractérisée en ce que** l'enveloppe de boîtier (5) entre l'ouverture d'amenée de matériau (18) et l'ouverture de sortie de matériau est divisée en au moins un segment court (14, 16) avec les autres ouvertures de passage (23, 24) et en des segments longs (15, 17), la longueur (B) des segments longs (15, 17) étant inférieure à leur distance extérieure (A).

2. Machine selon la revendication 1, **caractérisée en ce que** la longueur (B) des segments longs (15, 17) est de trois fois à sept fois supérieure, et la longueur (CD) des segments courts (14, 16) est d'une fois à trois fois supérieure au diamètre (d) des perçages destinés à recevoir les arbres (4) avec les éléments de traitement (9).

3. Machine selon la revendication 1 ou 2, **caractérisée en ce que** les ouvertures de passage (23, 24) dans les segments courts (14, 16) présentent un diamètre d'au moins la moitié du diamètre (d) des perçages destinés à recevoir les arbres (4) avec les éléments de traitement (9).

4. Machine selon l'une des revendications précédentes, **caractérisée en ce qu'**au moins un des segments courts (14) est pourvu d'au moins une ouverture de passage (23) qui présente un diamètre qui est supérieur au diamètre (d) des perçages destinés à recevoir les arbres (4) avec les éléments de traitement (9).

5. Machine selon la revendication 4, **caractérisée en ce que** le segment court (14) avec la grande ouverture de passage (23) présente une longueur (C) qui est égale ou supérieur à la longueur (D) du ou des autres segments courts (16).

6. Machine selon l'une des revendications précédentes, **caractérisée en ce que** les ouvertures de passage (23, 24) dans les segments courts (14, 16) sont réalisées pour amener des substances additives et/ou pour faire sortir des gaz.

7. Machine selon les revendications 4 et 6, **caractérisée en ce que** la grande ouverture de passage (23) est réalisée pour amener des substances additives solides.

8. Machine selon l'une des revendications précédentes, **caractérisée en ce que** les ouvertures de passage (24) peuvent être fermées par des pièces d'obturation (31).

9. Machine selon l'une des revendications précédentes, **caractérisée en ce qu'**au moins une partie des segments (14 à 17) présente un chauffage ou une réfrigération.

10. Machine selon la revendication 9, **caractérisée en ce que** les segments longs (15, 17) présentent une gorge annulaire destinée à recevoir un corps de chauffage ou de réfrigération (36).

11. Machine selon l'une des revendications précédentes, **caractérisée en ce que** les éléments de traitement sont formés par des éléments à vis sans fin (9) et **en ce que** entre l'ouverture d'amenée de matériau (18) et l'ouverture de sortie de matériau est prévue au moins une zone de malaxage (19, 20) dans laquelle les éléments à vis sans fin (9) sont remplacés par des blocs de malaxage.

12. Machine selon la revendication 11, **caractérisée en ce que** les segments courts (14, 16) sont agencés en dehors des zones de malaxage (19, 20).

13. Machine selon l'une des revendications précédentes, **caractérisée en ce qu'**il est prévu un segment de remplissage (13) présentant l'ouverture d'amenée de matériau (18).

14. Machine selon la revendication 13, **caractérisée en ce que** le segment de remplissage (13) est pourvu d'une ouverture de sortie de gaz (42).

15. Machine selon la revendication 13, **caractérisée en ce que** pour permettre la sortie du gaz hors de la chambre (2) contenant les arbres (4), le noyau intérieur (6) est réalisé creux, et **en ce qu'**au moins dans la région de l'ouverture d'amenée de matériau (18) sont prévues des ouvertures de sortie de gaz (41) depuis la chambre (2) contenant les arbres (4) jusque dans le noyau intérieur (6) creux.
